# FASCICULE DE BREVET EUROPEEN

(11) **EP 0 747 398 B1**
(45) Date de publication et mention de la délivrance du brevet: **27.09.2000**
(21) Numéro de dépôt: 96401211.6
(22) Date de dépôt: 06.06.1996
(51) Int. Cl.: C08B 37/16, C08L 5/16

(54) **Composition pulvérulente d'hydroxypropyl-bétacyclodextrine et son procédé de préparation**
Pulverförmige Zusammensetzung von Hydroxypropylbetacyclodextrin und Verfahren zu deren Herstellung
Powder composition of hydroxypropyl betacyclodextrin and process for preparing the same

(30) Priorité: 08.06.1995 FR 9506772
(43) Date de publication de la demande: 11.12.1996
(73) Titulaire: ROQUETTE FRERES, 62136 Lestrem (FR)
(72) Inventeur: Fuertes, Patrick, 59130 Lambersart (FR); Vappereau, Bruno, 59253 La Gorgue (FR); Serpelloni, Michel, 62660 Beuvry-Les-Bethune (FR); Lis, José, 59253 La Gorgue (FR)
(74) Mandataire: Boulinguiez, Didier

(56) Documents cités:
- WO-A-95/13864
- FR-A- 2 659 970
- CHEMICAL ABSTRACTS, vol. 93, no. 14, 6 Octobre 1980 Columbus, Ohio, US; abstract no. 134246, XP002012161 & JP-A-55 056 801 (ISHIKAWAJIMA-HARIMA HEAVY INDUSTRIES CO. LTD.) 26 Avril 1980

## Description

L'invention a pour objet une nouvelle composition pulvérulente d'hydroxypropyl-bétacyclodextrine présentant une granulométrie particulière ainsi qu'une excellente vitesse de dissolution.

Elle vise également un procédé particulier d'obtention de cette composition ainsi que les utilisations de celle-ci dans l'industrie.

Les cyclodextrines, macrocycles contenant six, sept ou huit motifs glucose selon qu'il s'agit d'alpha, de beta ou de gamma-cyclodextrine, sont largement décrites dans la littérature, en particulier pour leurs propriétés solubilisatrices et stabilisatrices de divers composés. Ces propriétés, essentiellement dues à leur capacité à former un complexe en présence de composés aptes à se loger, en tout ou partie, à l'intérieur de ces macrocycles, trouvent un réel intérêt dans les industries alimentaire, pharmaceutique et phytosanitaire. Les dérivés des cyclodextrines ont eux aussi été étudiés, en particulier dans le but d'augmenter la solubilité dans l'eau des cyclodextrines, qui n'est pas très élevée : celle-ci n'est en effet que de 1,8 g pour 100 ml pour la βcyclodextrine par exemple. Parmi ces dérivés, les éthers de cyclodextrine, et plus particulièrement les hydroxyalkylcyclodextrines, ont fait l'objet d'une attention particulière, en raison de leur grande solubilité dans l'eau, de leur innocuité et de la facilité à les fabriquer.

Ces hydroxyalkylcyclodextrines correspondent à des cyclodextrines dans lesquelles tout ou partie des groupes hydroxy sont éthérifiés avec des groupements hydroxyalkyl.

Les caractéristiques de ces dérivés ont incité les scientifiques à les tester dans différents domaines, notamment pharmaceutique, cosmétique et phytosanitaire.

En effet, la bonne solubilité dans l'eau de ces dérivés présente un intérêt tout particulier pour l'élaboration de formes hydrosolubles de principes actifs pharmaceutiques eux-mêmes très peu ou pas solubles dans l'eau, présentant en outre une grande stabilité.

Ainsi, le brevet américain n° 4 727 064 déposé par PITHA protège des compositions pharmaceutiques contenant un complexe amorphe d'un actif pharmaceutique avec un composé cyclodextrine, dont en particulier l'hydroxypropyl-βcyclodextrine. Ce complexe permet d'améliorer la solubilité du principe actif et donc son absorption par l'organisme.

La Société JANSSEN PHARMACEUTICA a également obtenu un brevet européen EP 149 197 relatif à des préparations pharmaceutiques constituées de composés d'inclusion de médicaments difficilement solubles dans l'eau ou instables dans l'eau avec une béta-cyclodextrine partiellement éthérifiée, et en particulier l'hydroxypropyl-βcyclodextrine, dans le but d'améliorer la solubilité et la stabilité dans l'eau de ces médicaments.

Un brevet européen accordé à la Société SHISEIDO sous le n° EP 366154 protège l'utilisation de l'hydroxypropyl-βcyclodextrine dans un produit cosmétique. Les complexes obtenus avec les composés peu solubles dans l'eau que sont les filtres U.V., les conservateurs et les parfums présentent une très bonne hydrosolubilité et les produits cosmétiques les contenant possèdent une stabilité satisfaisante sans qu'il soit nécessaire de faire appel à des agents solubilisants par ailleurs irritants pour la peau.

Enfin, on peut également noter que des utilisations de l'hydroxypropyl-βcyclodextrine dans le domaine phytosanitaire ont été décrites, notamment dans les brevets japonais de SUN OIL n° 1068303 et NIHON NOYAKU n° 63079802. Il y est fait état d'un intérêt au niveau toxicité du composé chimique complexé ainsi qu'au niveau solubilité, et stabilité des complexes.

On ajoutera qu'il existe de nombreuses autres références, dans la littérature, décrivant spécifiquement des complexes d'un actif particulier avec l'hydroxypropyl-βcyclodextrine.

Les dérivés hydroxyalkylés des cyclodextrines sont généralement obtenus selon le procédé qui consiste à faire réagir dans des conditions particulières de température, de pression et de temps, l'oxyde de propylène avec une β-cyclodextrine en milieu aqueux et à pH alcalin. La soude est généralement choisie comme catalyseur de la réaction.

Cette réaction est généralement réalisée à une température d'au moins 70°C.

Après la fin de la réaction, le milieu réactionnel est neutralisé et l'hydroxypropyl-βcyclodextrine est isolée, purifiée et récupérée sous forme d'une solution aqueuse.

Dans la mesure où une forme solide est souhaitée, différentes techniques ont déjà été mises en oeuvre. Ainsi, dans le chapitre 2, relatif aux hydroxypropyl-βcyclodextrines, de l'ouvrage édité par le Pfr DUCHENE en 1991 et intitulé "New trends in Cyclodextrins and derivatives", L. SZENTE et C.E. STRATTAN citent la lyophilisation, l'atomisation et l'évaporation.

La lyophilisation et l'atomisation sont également les moyens suggérés par AMERICAN MAIZE PRODUCTS dans son brevet français n° 2 597 485, pour récupérer les éthers de cyclodextrines.

Cependant, comme relevé par L. SZENTE et C.E. STRATTAN dans la référence citée ci-dessus, les poudres obtenues selon ces différentes techniques présentent de nombreux défauts, et en particulier une mauvaise dissolution.

En outre, celles-ci s'écoulent difficilement, et possèdent de médiocres caractéristiques de compression.

Par ailleurs, ces techniques conduisent à l'obtention de très fines particules, qui constituent une gène notable au niveau des opérations de remplissage et de vidage des trémies et goulottes d'alimentation, ainsi que des sacs d'emballage. De plus, ces fines particules peuvent être à l'origine d'explosions et représentent également une source potentielle d'irritation pour le manipulateur.

Forte de ce constat, la Société demanderesse a donc cherché à mettre au point une composition pulvérulente d'hydroxypropyl-βcyclodextrine dont la vitesse de dissolution soit élevée et qui soit mieux compatible avec toutes les exigences industrielles, n'ayant pas les défauts d'écoulement et de compression des formes poudre connues de l'hydroxypropyl-βcyclodextrine, tout en n'étant pas source de poussières ou d'explosions dans les ateliers de production.

Et il est du mérite de la Société demanderesse d'avoir réussi à préparer une composition pulvérulente d'hydroxypropyl-βcyclodextrine exempte des défauts ci-dessus mentionnés, présentant simultanément une granulométrie "centrée" dépourvue de fines particules et une capacité notablement améliorée à se dissoudre en milieu aqueux.

L'invention se rapporte donc à une composition pulvérulente d'hydroxypropyl-βcyclodextrine caractérisée en ce qu'elle présente moins de 25 % environ de particules de taille inférieure à 100 microns et dont la vitesse de dissolution en milieu aqueux, mesurée selon un test I, est inférieure à 5 minutes à 21°C pour une solution à 20 % de matière sèche.

L'invention se rapporte également à un procédé de préparation d'une composition pulvérulente d'hydroxypropyl-βcyclodextrine possédant les caractéristiques physique et fonctionnelle exposées ci-dessus.

Selon la première caractéristique essentielle de la composition pulvérulente d'hydroxypropyl-βcyclodextrine selon l'invention, que l'on appellera par la suite plus simplement HPβCD, celle-ci présente une granulométrie particulière et centrée. En effet, elle contient moins de 25 % environ de particules de taille inférieure à 100 microns.

De préférence, la composition pulvérulente d'HPβCD ne contient pas plus de 10 % environ de particules de taille inférieure à 40 microns et de manière encore plus préférentielle, elle contient moins de 40 % environ de particules de taille supérieure à 315 microns.

En ce qui concerne l'absence de très fines particules, qui représente un avantage particulier caractéristique des compositions selon l'invention, celle-ci a été mise en évidence en utilisant l'appareil DUSTMETER (configuration n°II), commercialisé par la Société HENBACH ENGINEERING. Le principe de la mesure repose sur la mise en mouvement du produit à tester dans un tonnelet en rotation ; les fines particules présentes sont alors entraînées par un flux d'air, puis collectées sur un filtre. La pesée de ce filtre, avant et après mise en mouvement, donne la quantité de fines particules accumulées sur le filtre.

Dans le cas de la composition pulvérulente d'HPβCD selon l'invention, la quantité de poudre mise en oeuvre est de 100 grammes, le débit du flux d'air est de 8 litres par minute et la durée de la mise en mouvement est de 5 minutes. Les résultats obtenus démontrent clairement la quantité négligeable de fines particules présentes dans les compositions selon l'invention comparativement à une composition selon l'art antérieur.

La seconde caractéristique essentielle de la composition pulvérulente d'HPβCD selon l'invention consiste en son aptitude à se dissoudre très rapidement.

Ainsi, le temps de dissolution mesuré dans les conditions du test I qui sera décrit ci-après est inférieur à 5 minutes, de préférence inférieur à 3 minutes, et plus préférentiellement encore inférieur à 2 minutes, à une température de 21 °C et pour une solution d'HPβCD à 20 % de matière sèche, ce qui constitue une amélioration importante par rapport à la vitesse de dissolution des poudres d'HPβCD connues. Et cette amélioration est particulièrement appréciable dans la mesure où une vitesse de dissolution rapide conditionne une utilisation plus large encore de l'HPβCD.

Pour mesurer la vitesse de dissolution, qui constitue donc la seconde caractéristique essentielle de la composition pulvérulente d'HPβCD conforme à l'invention, on procède selon le test I, qui consiste à mesurer le temps nécessaire à la solubilisation complète dans de l'eau déminéralisée de différentes quantités d'HPβCD correspondant à des compositions à 5, 10, 20, 30 et 40 % de matière sèche. Pour cette mesure, on introduit dans un bécher de 150 ml de forme haute la quantité d'eau déminéralisée nécessaire à l'obtention en final de 100 g de composition ayant une teneur en HPβCD de 5, 10, 20, 30 ou 40 %, puis on soumet cette solution à une agitation à 1250 tours/minute avec un barreau magnétique (longueur : 25mm, diamètre : 6mm), et on ajoute la quantité d'HPβCD retenue. Ce test est réalisé à deux températures : 21 °C et 60°C.

Le temps de dissolution retenu est celui correspondant à l'obtention d'une parfaite limpidité visuelle des suspensions ainsi préparées.

Que ce soit à température ambiante ou à une température élevée et quelle que soit la concentration en HPβCD, les temps de dissolution des compositions pulvérulentes selon l'invention sont toujours nettement inférieurs à ceux des compositions selon l'art antérieur.

En outre, on note qu'avec les compositions selon l'art antérieur, une accumulation de poudre en surface se produit dans le cas des plus hautes matières sèches, accumulation éventuellement suivie d'un débordement. Ce problème a nécessité l'addition d'HPβCD de manière fractionnée.

Outre le temps de dissolution, la demanderesse a par ailleurs mis en évidence d'autres caractéristiques fonctionnelles particulièrement avantageuses de la composition selon l'invention, telles que son aptitude à l'écoulement et sa comprimabilité.

L'aptitude à l'écoulement a été évaluée avec l'appareil commercialisé par la Société HOSOKAWA. Cet appareil permet de mesurer dans des conditions standardisées et reproductibles l'aptitude à l'écoulement d'une poudre et de calculer une note d'écoulement appelée également indice de CARR. La composition pulvérulente d'HPβCD conforme à l'invention présente une note d'écoulement excellente, comprise entre 60 et 90. Cette note sera de préférence comprise entre 70 et 85. L'écoulement des poudres selon l'invention apparaît ainsi nettement meilleur que celui des poudres de l'art antérieur.

Cette caractéristique est particulièrement intéressante dans la pratique industrielle, puisqu'elle facilite les opérations de remplissage et de vidange des trémies et des récipients ou encore des formes pharmaceutiques telles que sachets et gélules.

Avec le même appareil et selon la méthode indiquée par le fabricant, la densité apparente aérée a été mesurée. Les valeurs obtenues pour les compositions selon l'invention sont toujours comprises entre 300 et 650 g/l, et de préférence 350 à 600 g/l, alors que pour les compositions de l'art antérieur, la densité apparente aérée est inférieure à 300 g/l.

Pour ce qui est de la comprimabilité, celle-ci est déterminée par le test II, qui consiste à mesurer la force, exprimée en Newton (N), nécessaire pour provoquer l'écrasement d'un comprimé préparé à partir de la composition à tester, c'est-à-dire pour provoquer l'apparition de lignes de rupture au sein de la masse constitutive de celui-ci. Cette force traduit donc la résistance à l'écrasement d'un comprimé cylindrique, à faces convexes, d'un diamètre de 13mm, d'une épaisseur de 5 mm et d'un poids de 0,499 g, c'est à dire d'une masse volumique ou densité de 1,15 g/ml, ladite force étant exercée contre la surface périphérique du comprimé en direction de l'axe de révolution de celui-ci au moyen d'une butée mobile s'appliquant contre ladite surface le long d'une génératrice, ledit comprimé étant par ailleurs immobilisé contre une butée fixe appliquée également contre la surface périphérique du comprimé le long d'une génératrice diamétralement opposée à celle contre laquelle s'applique la butée mobile.

Pour préparer ces comprimés, on ajoute à la composition étudiée 0,5 % en poids de lubrifiant, à savoir du stéarate de magnésium.

Ces deux produits sont homogénéisés l'un à l'autre à l'aide d'un mélangeur TURBULA T2C (commercialisé par la Firme WILLY A. BACHOFEN AG, Suisse) pendant cinq minutes à la vitesse d'entraînement de 42 tours/minutes.

Pour effectuer la compression du mélange obtenu, on a recours à une presse alternative FROGERAIS de type AM. Cette presse est équipée de poinçons ronds à faces concaves de diamètre égal à 13 millimètres.

Pour parvenir aux caractéristiques des comprimés mentionnés ci-dessus, on règle sur la presse l'enfoncement du poinçon supérieur et le volume de remplissage de la matrice, cette dernière disposition permettant de fixer la quantité en poids de mélange pulvérulent souhaitée, en l'espèce 0,499 g.

Pour l'évaluation de la résistance à l'écrasement de ces comprimés, on utilise un duromètre SCHLEUNIGER 2E (commercialisé en France par les Etablissements FROGERAIS).

Contrairement aux compositions de l'art antérieur, obtenues selon les techniques connues, avec lesquelles il n'a pas été possible de réaliser des comprimés à cause de problème de collage et de clivage qui sont apparus lors de l'application d'une pression, les compositions pulvérulentes d'HPβCD selon l'invention possèdent une comprimabilité tout-à-fait satisfaisante. Celle-ci se traduit par une dureté de comprimés qui sera dans tous les cas supérieure à 30 N, de préférence supérieure à 60 N, et de manière encore plus préférentielle supérieure à 100 N, pour une densité de comprimé de 1,15 g/ml.

Cette comprimabilité est recherchée pour la préparation de tablettes à sucer ou à mâcher, que ce soit pour le domaine pharmaceutique ou pour celui de la confiserie.

Les compositions pulvérulentes d'HPβCD conformes à l'invention sont susceptibles d'être obtenues selon un procédé qui s'apparente à une atomisation, dans des conditions particulières, d'une solution d'hydroxypropyl-βcyclodextrine, bien que cette technique n'ait pas permis d'obtenir jusqu'alors une composition pulvérulente d'hydroxypropyl-βcyclodextrine présentant les caractéristiques granulométriques et fonctionnelles de la composition selon l'invention. Ce procédé consiste essentiellement à pulvériser une solution d'HPβCD sur un lit pulvérulent en mouvement de particules d'HPβCD.

En particulier, le procédé mis en oeuvre pour l'obtention des compositions selon l'invention comporte les étapes suivantes :
- préparation d'une solution d'HPβCD ayant une matière sèche d'au moins 30 %,
- pulvérisation fine de cette solution sur un lit pulvérulent de particules en mouvement d'HPβCD, la température de ce lit étant comprise entre 40°C et 110°C et la masse de ce lit représentant constamment au moins 0,5 fois la masse de la solution pulvérisée par heure,
- séchage du lit pulvérulent et de la solution afin d'obtenir la composition pulvérulente d'HPβCD,
- recyclage éventuel partiel de la composition afin qu'elle constitue un nouveau lit pulvérulent d'HPβCD.

Cette technique permet ainsi d'obtenir une composition pulvérulente d'HPβCD présentant une granulométrie particulière et centrée, tout en présentant une excellente vitesse de dissolution. Ces caractéristiques, ainsi que son aptitude à l'écoulement et à la comprimabilité, peuvent être ajustées en modifiant la matière sèche de la solution d'HPβCD à pulvériser, la finesse de pulvérisation, le moyen de mise en mouvement des particules, la température du lit, la température du séchage et les masses respectives du lit et de la solution pulvérisée.

En ce qui concerne la matière sèche de la solution d'HPβCD, on préfère qu'elle soit supérieure ou égale à 50 %.

Par ailleurs, il est préférable d'éviter une pulvérisation grossière de la solution, auquel cas on observe un collage des particules.

Aussi, afin que la composition pulvérulente d'HPβCD présente les propriétés spécifiques décrites plus haut, il convient de retenir un matériel permettant de former à partir de la solution de très fines gouttelettes, voire un brouillard.

En ce qui concerne la nature des particules d'HPβCD constituant le lit pulvérulent, l'idéal est de retenir pour ce lit des particules d'HPβCD présentant l'ensemble des caractéristiques de la composition pulvérulente d'HPβCD conforme à l'invention. Ceci peut être obtenu en réalisant un recyclage partiel de la composition conforme à l'invention, laquelle joue alors le rôle de lit pulvérulent de particules d'HPβCD.

La mise en mouvement des particules constituant le lit pulvérulent peut être obtenue mécaniquement, ou par soufflage d'air. Cette dernière possibilité est préférée car il est facile en choisissant la température de l'air, d'ajuster la température du lit à une valeur comprise entre 40 et 110°C.

Généralement, on préfère que la température de ce lit soit maintenue entre 50 et 80°C.

Le séchage du lit pulvérulent sur lequel a été pulvérisé le sirop doit être conduit de façon à obtenir une teneur en eau finale ne dépassant pas 5 % et de préférence 3 % de la composition.

La demanderesse a démontré que l'on pouvait avantageusement fabriquer en continu la composition pulvérulente d'HPβCD, par exemple en utilisant une tour d'atomisation de la Société NIRO ATOMIZER du type "Multiple Effet" ou M.S.D., ce dernier type étant préféré. De telles tours d'atomisation permettent, grâce à leur conception, de reproduire toutes les étapes essentielles du procédé conforme à l'invention.

Ce matériel permet, en effet, de pulvériser très finement à l'aide de la buse qu'il comporte, une solution ayant une température comprise entre 30 et 100°C et une matière sèche comprise entre 30 et 70 %, sur un lit de particules d'HPβCD, mis et maintenu en mouvement avec de l'air. De plus, ce matériel permet simultanément d'opérer un séchage par de l'air chaud. On peut choisir avantageusement une température d'entrée d'air comprise entre 160 et 300°C et des débits en matière entrante tels que la température de l'air sortant de la tour soit comprise entre 45 et 130°C et mieux encore entre 60 et 90°C. Ce matériel permet également de procéder éventuellement à un recyclage partiel de la composition pulvérulente d'HPβCD et de la disperser très finement dans la tour, de préférence autour de la buse de pulvérisation de la solution.

En raison de ses propriétés particulières, la composition pulvérulente d'HPβCD conforme à l'invention peut être avantageusement utilisée en tant qu'agent améliorant la solubilité et/ou la stabilité dans l'eau de composés actifs dans la formulation de poudres à dissoudre ou de comprimés dans les domaines pharmaceutique, cosmétique et agrochimique.

Les avantages de la présente invention seront mieux compris à la lecture des exemples suivants, donnés à titre illustratif sans être aucunement limitatifs, et faisant état de modes de réalisation particuliers de la composition pulvérulente d'HPβCD selon l'invention.

### EXEMPLE :

Préparation de trois compositions pulvérulentes d'HPβCD selon l'invention et comparaison avec un produit de l'art antérieur.

On prépare une solution d'HPβCD selon un procédé classique dans les conditions suivantes :

On met en solution 1275 g de β-cyclodextrine commerciale (correspondant à 1134 g anhydre) dans 1600 g d'une solution d'hydroxyde de sodium à 6 % (96 g de soude dans 1504 g d'eau déminéralisée), en maintenant une température de 80°C environ.

La solution est placée dans un réacteur inerté à l'azote muni d'une agitation et d'un condenseur. On introduit goutte à goutte 406 g d'oxyde de propylène dans le réacteur en maintenant la température à 80-100°C et on poursuit la réaction 4 heures après la fin de l'addition de l'oxyde de propylène. On refroidit ensuite le mélange réactionnel et on neutralise par addition d'acide chlorhydrique concentré.

Le mélange réactionnel est éventuellement purifié selon le degré de pureté désiré par les techniques connues de l'art antérieur (filtration, décoloration par traitement au charbon actif, déminéralisation, lavage à l'éthanol, extraction à l'acétone, dialyse).

Pour chacune des trois compositions selon l'invention, on procède ensuite respectivement de la manière suivante :

### - Composition n° 1

La solution est ajustée à 60 % de matière sèche et portée à 50°C avant d'être soumise à une atomisation dans une tour du type "Multiple Effet" de la Société NIRO ATOMIZER.

On procède alors à la pulvérisation fine de cette solution sur un lit pulvérulent de particules en mouvement correspondant aux particules formées en début d'opération.

La température du lit de particules en mouvement est ajustée à 50°C.

La température de l'air de séchage à l'entrée supérieure de la tour est comprise entre 175 et 195°C, la température de l'air sortant de la tour étant comprise entre 45 et 60°C.

### - Composition n° 2

La solution est ajustée à 35 % de M.S. et portée à 70°C avant d'être soumise à une atomisation dans une tour du type M.S.D. de la Société NIRO ATOMIZER.

La température du lit de particules en mouvement est ajustée à 75°C.

La température de l'air de séchage à l'entrée supérieure de la tour est comprise entre 200 et 230°C, la température de l'air sortant de la tour étant comprise entre 65 et 85 °C.

### - Composition n°3

La solution est ajustée à 55 % et portée à 70 °C avant d'être soumise à une atomisation dans une tour du type M.S.D. de la Société NIRO ATOMIZER.

La température du lit de particules en mouvement est ajustée à 62°C.

La température de l'air de séchage à l'entrée supérieure de la tour est comprise entre 180°C et 200°C, la température de l'air sortant de la tour étant comprise entre 60 et 80°C.

### - Composition selon l'art antérieur

Cette composition est obtenue selon une technique classique d'atomisation, qui consiste en une simple pulvérisation d'une solution d'HPβCD à 35 % de matière séche dans une tour d'atomisation classique, en l'absence de tout lit pulvérulent de particules d'HPβCD.

La température de l'air de séchage à l'entrée de la tour est comprise entre 230 et 280°C, la température de l'air sortant étant comprise entre 100 et 130°C.

Les principales caractéristiques physiques et fonctionnelles des compositions n°1, n°2 et n° 3 obtenues dans les conditions décrites ci-dessus sont données dans le tableau suivant.

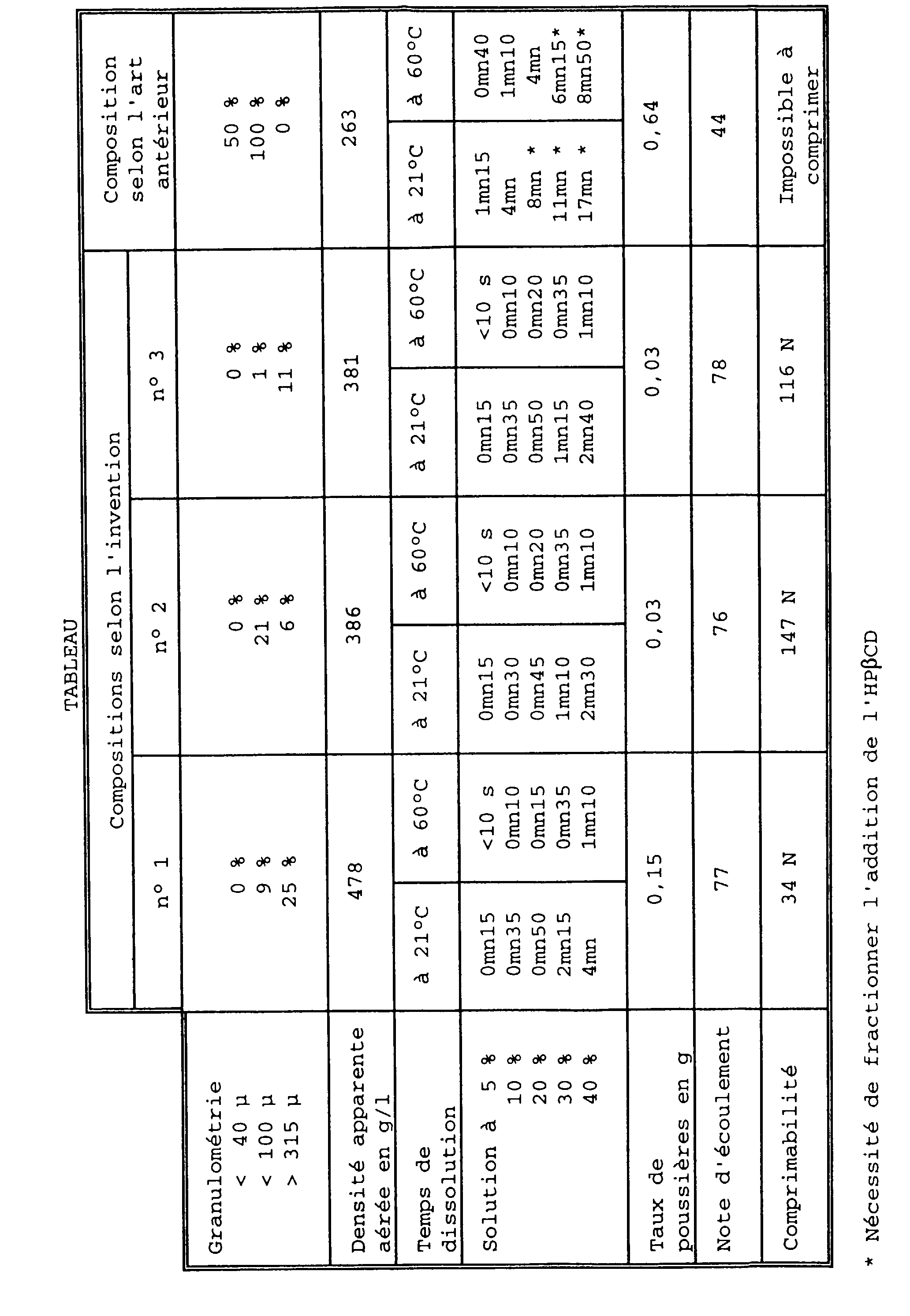

Contrairement à la composition de l'art antérieur, les compositions conformes à l'invention allient avantageusement des propriétés qui n'avaient, jusqu'à présent, jamais été trouvées simultanément. Elles possèdent en effet à la fois les caractéristiques de se dissoudre très rapidement dans l'eau, d'être compressibles, de s'écouler facilement et de ne pas générer de très fines particules.

## Revendications

1. Composition pulvérulente d'hydroxypropyl-βcyclodextrine, caractérisée en ce qu'elle présente moins de 25 % environ de particules de taille inférieure à 100 microns et en ce qu'elle présente un temps de dissolution en milieu aqueux, mesuré selon un test I (voir description), inférieur à 5 minutes à 21 °C pour une solution à 20 % de matière sèche.

2. Composition pulvérulente d'hydroxypropyl-βcyclodextrine selon la revendication 1, caractérisée en ce que le temps de dissolution, mesuré selon le test I, est inférieur à 3 minutes, et de préférence inférieur à 2 minutes.

3. Composition selon l'une ou l'autre des revendications 1 et 2, caractérisée en ce qu'elle ne présente pas plus de 10 % environ de particules de taille inférieure à 40 microns.

4. Composition selon l'une quelconque des revendications 1 à 3, caractérisée en ce qu'elle présente moins de 40 % environ de particules de taille supérieure à 315 microns.

5. Composition selon l'une quelconque des revendications 1 à 4, caractérisée en ce qu'elle présente une note d'écoulement comprise entre 60 et 90, et de préférence comprise entre 70 et 85.

6. Composition selon l'une quelconque des revendications 1 à 5, caractérisée en ce qu'elle présente une densité apparente aérée comprise entre 300 et 650 g/l, et de préférence comprise entre 350 et 600 g/l.

7. Composition selon l'une quelconque des revendications 1 à 6, caractérisée en ce qu'elle présente une comprimabilité, déterminée selon un test II (voir description), supérieure à 30 N, de préférence supérieure à 60 N, et de manière encore plus préférentielle, supérieure à 100 N.

8. Procédé d'obtention d'une composition pulvérulente d'HPβCD caractérisée en ce qu'il comporte les étapes suivantes :
- préparation d'une solution d'HPβCD ayant une matière sèche d'au moins 30 %,
- pulvérisation fine de cette solution sur un lit pulvérulent de particules en mouvement d'HPβCD, la température de ce lit étant comprise entre 40 et 110 °C et la masse de ce lit représentant constamment au moins 0,5 fois la masse de la solution pulvérisée par heure,
- séchage du lit pulvérulent et de la solution afin d'obtenir la composition pulvérulente d'HPβCD,
- recyclage éventuel partiel de la composition afin qu'elle constitue un nouveau lit pulvérulent d'HPβCD.

## Patentansprüche

1. Pulverförmige Zusammensetzung von Hydroxypropyl-betacyclodextrin, dadurch gekennzeichnet, dass sie weniger als ungefähr 25% an Teilchen mit einer Größe kleiner als 100 Mikrometer aufweist und dadurch, dass sie für eine Lösung mit 20% Trockensubstanz in wässrigem Medium eine Auflösezeit, gemessen gemäß einem Test I (siehe Beschreibung), kleiner als 5 Minuten bei 21 °C aufweist.

2. Pulverförmige Zusammensetzung von Hydroxypropyl-betacyclodextrin gemäß Anspruch 1, dadurch gekennzeichnet, dass die Auflösezeit, gemessen gemäß dem Test I, kleiner als 3 Minuten und vorzugsweise kleiner als 2 Minuten ist.

3. Zusammensetzung gemäß dem einem oder dem anderen der Ansprüche 1 und 2, dadurch gekennzeichnet, dass sie nicht mehr als ungefähr 10% an Teilchen mit einer Größe kleiner als 40 Mikrometer aufweist.

4. Zusammensetzung gemäß einem der Ansprüche 1 bis 3, dadurch gekennzeichnet, dass sie weniger als ungefähr 40% an Teilchen mit einer Größe von mehr als 315 Mikrometer aufweist.

5. Zusammensetzung gemäß einem der Ansprüche 1 bis 4, dadurch gekennzeichnet, dass sie einen Index des Fließverhaltens zwischen 60 und 90 und vorzugsweise zwischen 70 und 85 aufweist.

6. Zusammensetzung gemäß einem der Ansprüche 1 bis 5, dadurch gekennzeichnet, dass sie eine lufthaltige scheinbare Dichte zwischen 300 und 650 g/l und vorzugsweise zwischen 350 und 600 g/l aufweist.

7. Zusammensetzung gemäß einem der Ansprüche 1 bis 6, dadurch gekennzeichnet, dass sie eine Komprimierbarkeit, bestimmt gemäß einem Test II (siehe Beschreibung), größer als 30 N, vorzugsweise größer als 60 N, und noch mehr bevorzugt größer als 100 N aufweist.

8. Verfahren zur Herstellung einer pulverförmigen Zusammensetzung von HPβCD, dadurch gekennzeichnet, dass es die folgenden Schritte umfasst:
- Herstellung einer HPβCD-Lösung mit einer Trockensubstanz von wenigstens 30%,
- Feinzerstäubung dieser Lösung auf einem pulverförmigen Bett von bewegten HPβCD-Teilchen, wobei die Temperatur dieses Betts zwischen 40 und 110 °C liegt und die Masse dieses Betts beständig wenigstens 0,5-mal die Masse der pro Stunde zerstäubten Lösung darstellt.
- Trocknen des pulverförmigen Betts und der Lösung, um die pulverförmige HPβCD-Zusammensetzung zu erhalten,
- eventuelles Teil-Zurückführen der Zusammensetzung, damit sie ein neues pulverförmiges HPβCD-Bett bildet.

## Claims

1. Pulverulent hydroxypropyl-β-cyclodextrin composition, characterized in that it contains less than about 25% of particles smaller than 100 microns in size and in that it has a dissolution time in aqueous medium, measured according to a Test I (see description), of less than 5 minutes at 21°C for a solution with a solids content of 20% by weight.

2. The pulverulent hydroxypropyl-β-cyclodextrin composition according to claim 1, characterized in that the dissolution time, measured according to Test I, is less than 3 minutes, preferably less than 2 minutes.

3. The composition according to any one of claims 1 and 2, characterized in that it does not contain more than about 10% of particles smaller than 40 microns in size.

4. The composition according to any one of claims 1 to 3, characterized in that it contains less than about 40% of particles larger than 315 microns in size.

5. The composition according to any one of claims 1 to 4, characterized in that it has a flow grade of between 60 and 90, preferably between 70 and 85.

6. The composition according to any one of claims 1 to 5, characterized in that it has an aerated apparent density of between 300 and 650 g/l, preferably between 350 and 600 g/l.

7. The composition according to any one of claims 1 to 6, characterized in that it has a compressibility, determined according to a Test II (see description), of greater than 30N, preferably greater than 60N, and even more preferably greater than 100N.

8. A process for the production of a pulverulent HPβCD composition, characterized in that it comprises the following steps :
- preparing a solution of HPβCD having a solids content of at least 30% by weight,
- fine spraying this solution on a moving pulverulent bed of HPβCD particles, the temperature of this bed being comprised between 40°C and 110°C and the mass of this bed constantly representing at least 0.5 times the mass of the solution sprayed per hour,
- drying the pulverulent bed and the solution so as to obtain the pulverulent HPβCD composition,
- optionally recycling a portion of the composition in order to constitute a new pulverulent HPβCD bed.
